# EUROPEAN PATENT APPLICATION

(11) **EP 0 988 801 A1**
(43) Date of publication of application: **29.03.2000**
(21) Application number: 97942238.3
(22) Date of filing: 03.10.1997
(51) Int. Cl.: A23P 1/08, A23L 1/00, A23G 1/00

(54) **G0AZING AGENT FOR FOOD EXCELLENT IN WORKABILITY IN COATING**

(30) Priority: 04.10.1996 JP 28297796
(71) Applicant: SHOWA SANGYO Co., Ltd., Tokyo, 101 (JP)
(72) Inventor: TAKAHASHI, Hidekazu, 20-2, Hinode 2-chome,Funabashi-shi,Chiba (JP); WASA, Tetsuya,Showa Sangyo Co., Ltd. R & D Center, Chiba 273 (JP)
(74) Representative: Bühling, Gerhard, Dipl.-Chem.
(86) International application number: JP9703545
(87) International publication number: WO9814076

(57) **Abstract**

A glazing agent for food characterized by comprising a solution prepared by dissolving a lipid in a 5 to 20 w/w% solution of a film-forming component in ethanol and/or isopropanol at a concentration of 5 to 20 w/w% based on the solid matter of the film-forming component, the lipid being liquid at ordinary temperatures and soluble in the above alcoholic solvent. The concentration of the lipid in the above solution of a film-forming component is 10 to 15 w/w% based on the solid matter of the film-forming component when the film-forming component is zein, or is 10 to 20 w/w% when the component is shellac. The lipid is a liquid fatty acid and/or a fatty acid ester of glycerol. The liquid fatty acid is at least one selected from a group comprising oleic acid, myristic acid, lauric acid, and mixed acids derived from edible vegetable fat and oil. The mixed fatty acid is soybean oil fatty acid and/or rice bran oil fatty acid. The zein is one purified through extraction with alcohol and precipitation of the extract in nearly anhydrous acetone. The food is confectionery including globular, tableted and granulated chocolate.

This invention is able to provide a glazing agent for food that inhibits the adhesion among particles in coating to give a glossy coating, thus being excellent in workability.

## Description

### TECHNICAL FIELD

This invention relates to a glazing agent for food. More particularly, this invention relates to a coated glazing agent for food that inhibits the adhesion among individual particles (grains) during coating and forms a pliable and glossy film, thus being excellent in workability.

### BACKGROUND ART

Zein is the main protein of corn, having a unique property that it is insoluble in water but soluble in aqueous alcohol. It has been known to, by making use of the property of zein, form a film that is excellent in resistance to water, acids, and heat, and in electrical insulation, by coating the surface of a material with an alcoholic solution of zein through a spraying, application, or immersion process. Shellac is the purified resin-like material secreted by *Laccifer lacca* Kerr., being insoluble in water and soluble in alcohol, and thus it is being utilized, like zein, as a film-forming agent.

In the process of food coating, warm air cannot be used for drying in treatment procedures of some food. For such food, zein and shellac used as alcoholic solutions thereof are superior to other film-forming agents used as aqueous solutions because the film formed with an alcoholic solution of zein or shellac is quick to dry. However the strong adhesive property of zein and shellac may cause binding of individual pieces of food under treatment to reduce the workability during coating of some types of food.

Shellac is predominantly used for coating of food, e.g., , for glazing coating of confectionery including chocolate which is coated as follows.

Chocolate is placed in a coating device equipped with a rotary pan, and the whole amount of a shellac solution is added manually, followed by thorough mixing to bring the coating solution in sufficient contact with the chocolate, and drying by airflow with the pan rotated. Alternatively, after placing chocolate, the shellac solution is sprayed to the chocolate while the pan is rotated, followed by drying by airflow.

During the above coating operation of chocolate, the strong adhesive property of shellac may cause binding of chocolate particles to each other. Interruption of the operation is necessary to loosen the aggregates manually, which is the reason for the low workability of coating at present.

For preventing adhesion among particles during coating, the following inorganic substances and organic acid metal salts are frequently used, while the substances listed under "Others" are used less frequently.

Inorganic substances: talc, silicon dioxide hydrate, light anhydrous silicic acid, synthetic aluminum silicate, kaolin, bentonite, titanium oxide, aluminum oxide, magnesium oxide, calcium phosphate, calcium carbonate, etc.

Organic acid metal salts: alkaline earth metal salts of organic acids, such as calcium stearate and magnesium stearate

Others: caster oil fatty acid, ricinoleic acid

As for prevention of adhesion, the Japanese Patent Publication No. 6435/72 recommends, in the coating process using hydroxypropyl cellulose and shellac, the concomitant use of inorganic substances including talc, titanium oxide, silicon oxide, soft calcium carbonate, and calcium dihydrogen-phosphate as an adhesion-preventing agent. In the Japanese Published Unexamined Patent Application No.82311/84, shellac and talc are concomitantly used for prevention of adhesion among particles in enteric coating of drugs with the methacrylic acid - methyl methacrylate copolymer. In the Japanese Published Unexamined Patent Application No.167747/88 and No.169938/88, talc, titanium dioxide, aluminum oxide, magnesium oxide, calcium phosphate, calcium carbonate, etc. are used as dispersion adjuvants for prevention of aggregation of particles of a sweetening agent in the process of coating particles of the sweetening agent with shellac. Further, in the Japanese Published Unexamined Patent Application No.141862/86, polysaccharide powder is mixed for prevention of adhesion as well as for enhancement of a film- forming ability and for control of release in coating of vitamin C granules with zein.

However the purpose of coating in these cases is to attain moisture-proof, sustained-release, and/or enteric coating, etc., and mixing of such an inorganic substance, a metal salt of organic acid, or a powder polysaccharide into coating materials reduce gloss or glaze of the film itself.

In addition, in the Japanese Published Unexamined Patent Application No.129725/75, caster oil fatty acid or ricinoleic acid (in 5 to 30 w/w% based on the weight of shellac) and an antioxidant are added "to render the shellac coating strongly enteric, to make the work proceed smoothly without adhesion among particles during coating, and to prevent the film from changing over time". However, caster oil (fat and oil obtained from caster seed) is characterized by its fatty acid composition (with 85% or more of ricinoleic acid) , being not adequate for food because it may cause diarrhea after intake.

Many patents have been disclosed in which lipids are concomitantly used in coating with zein or shellac, and there are two major purposes for use of lipids: one is to make the film softer, more water-resistant, and stronger, for which common techniques are prevailed. The other is to prevent adhesion among particles after coating.

Also the present applicant proposed a coating material for food in the Japanese Published Unexamined Patent Application No.79846/92 wherein a film-forming material comprises a zein solution to which a C12 or higher fatty acid having the melting point below 65°C (oleic acid, myristic acid, lauric acid, a mixed fatty acid derived from food vegetable fat and oil) is added alone or in combination with a plasticizer (glycerol, propylene glycol, sorbitan fatty acid ester, shellac, triglyceride of a C8 - 10 medium-size chain fatty acid, liquid paraffin, acetic acid monoglyceride). However the object of the Japanese Published Unexamined Patent Application No.79846/92 is to enhance the transparency, water-resistance, and extensibility of the film, and not to render the film gloss or to prevent adhesion among particles during coating; thus it is evident that the concentration range of zein, the amount of fatty acid to be added, addition of a plasticizer alone, and the type of the plasticizer are different from those for the latter objects. Moreover, use of shellac is described in the Japanese Published Unexamined Patent Application No.79846/92 but shellac is used not as a major film-forming component but to modify the property of the film.

In the Japanese Published Unexamined Patent Application No.34727/96, the above-mentioned inorganic substances or organic acid metal salts are used for prevention of adhesion among soft capsules, and concomitant use of a lubricant such as a solid fatty acid or a fatty acid ester is recommended. However the lubricant is not mixed in the coating solution but adsorbed physically after coating.

In the Japanese Published Unexamined Patent Application No.10746/95, shellac, fatty acids, fatty acid esters, etc. are used as water repellent substances in coating of drugs to prevent adhesion of the drugs to the throat or esophagus when taken in. These substances are used for prevention of adhesion among particles after coating or for prevention of adhesion when taken in, and not for improvement of workability by prevention of adhesion among particles during the coating operation.

### DISCLOSURE OF THE INVENTION

An object of this invention is to provide a coated glazing agent for food which inhibits adhesion among particles during coating and forms a glossy film, thus being excellent in workability.

The inventors have completed this invention based on a finding that by mixing a lipid in a solution of a film-coating component at a certain ratio, the lipid being liquid at ordinary temperatures and soluble in the solvent, a glossy film capable of inhibiting adhesion among particles during coating can be formed, and that grazing coating of food can be achieved with excellent workability.

As mentioned above, the present applicant proposed a coating material for food in the Japanese Published Unexamined Patent Application No.79846/92 wherein a film-forming material containing zein comprises a zein solution to which a fatty acid is added alone or in combination with a plasticizer.

As the result of the difference in the object and in the method of evaluation, however, the present invention and the Japanese Published Unexamined Patent Application No.79846/92 are different with respect to the concentration range employed, the amount of the fatty acid added, addition of the plasticizer alone, and the type of the plasticizer. The inventors have also found a similar effect with the use of shellac which is employed in the present invention as a major film-forming component but was not used in the Japanese Published Unexamined Patent Application No.79486/92.

Any film-forming component may be used without particular limitations as far as it is a food additive used for coating of food, but zein or shellac is the most desirable to attain the object of this invention because of the formed film exhibiting excellent gloss. The quality of zein and shellac is not particularly restricted, though it is desirable to use the zein that is purified through extraction with alcohol and precipitation of the extract in nearly anhydrous acetone.

As the solvent to dissolve the film-forming component, organic solvents are usually used which have high solubility for the film-forming component and are quick to dry. Among such organic solvents, ethanol and isopropanol are particularly suitable because they are highly safe and gloss of the film after drying is desirable. The preferred concentration of such an organic solvent is 60 to 90 v/v % when the film-forming component is a conventional zein product, 60 to 95 v/v % when the film-forming component contains the zein purified through extraction with alcohol and precipitation of the extract in nearly anhydrous acetone, and 100% when the film-forming component is shellac. At these concentrations it is possible to obtain a very glossy coating quick to dry.

The concentration of the film-forming component in the solution is preferably 5 to 20 w/w%, more preferably 10 to 15 w/w%. At a concentration below 5 w/w%, the gloss of the film after coating would be undesirable, while at a concentration above 20 w/w% the effect of inhibiting adhesion among particles during coating would be reduced.

Lipid that is liquid at ordinary temperatures and soluble in a solvent is desirably an edible liquid fatty acid or a poly(glycerol fatty acid ester). The liquid fatty acids include oleic acid, myristic acid, lauric acid, and a mixed fatty acid derived from edible vegetable fat and oil. The mixed fatty acid is, for example, soybean oil fatty acid or rice bran oil fatty acid.

The concentration of the lipid added is preferably 5 to 20% based on the weight of the film-forming component dissolved in a solvent, being preferably 10 to 15% when zein is used, and 10 to 20% when shellac is used. If the concentration is below 5%, the effect of inhibiting adhesion among particles during coating would be low, while at a concentration above 20%, the gloss of the film after coating would be undesirable.

As described above, this invention provides a glazing agent for food, primarily consisting of a solution prepared by dissolving zein or/and shellac as a film-forming component at a concentration of 10 to 15 w/w% in an ethanol and/or isopropanol solvent, and a lipid that is liquid at ordinary temperatures and soluble in the solvent, the lipid being dissolved in the above solution at a concentration of 10 to 15 w/w% when zein is used and 10 to 20 w/w% when shellac is used, based on the solid matter of the film-forming component.

The materials to be coated are not particularly restricted as far as they are food, including globular, tableted, and granulated confectionery (chocolate, etc.).

### BEST MODE FOR CARRYING OUT THE INVENTION

This invention will be explained in the more concrete in the following Examples that should be construed as limiting the scope of the invention in no way.

### Example 1

To chocolate balls coated preliminarily with syrup were added selected ones of coating materials described below (0.15% with respect to the weight of chocolate balls based on the solid matter), and the mixture was mixed under airflow from a drier at room temperature. Adhesion among the chocolate balls during drying and the gloss of the film after drying were observed.

The results are shown in Tables 1 to 7.

Zein manufactured by Showa Sangyo Co., Ltd., shellac as Lacglaze 25E by Japan Shellac Industry Co., Ltd., soybean oil fatty acid by Showa Sangyo Co. Ltd., oleic acid as an extra pure reagent by Wako Pure Chemical Industries, LTD., medium-size chain fatty acid as Coconad MT by Kao Corporation, glycerol as a guaranteed reagent by Wako Pure Chemical Industries, LTD., glycerol fatty acid ester as Mybaset 9-08 by Koyo Shokai Co., Ltd., poly(glycerol fatty acid ester) as SY Glistar ML-500 by Sakamoto Pharmaceuticals Co., Ltd., and distilled acetic acid monoglyceride as Mybaset 9-45 by Koyo Shokai Co., Ltd. were used.

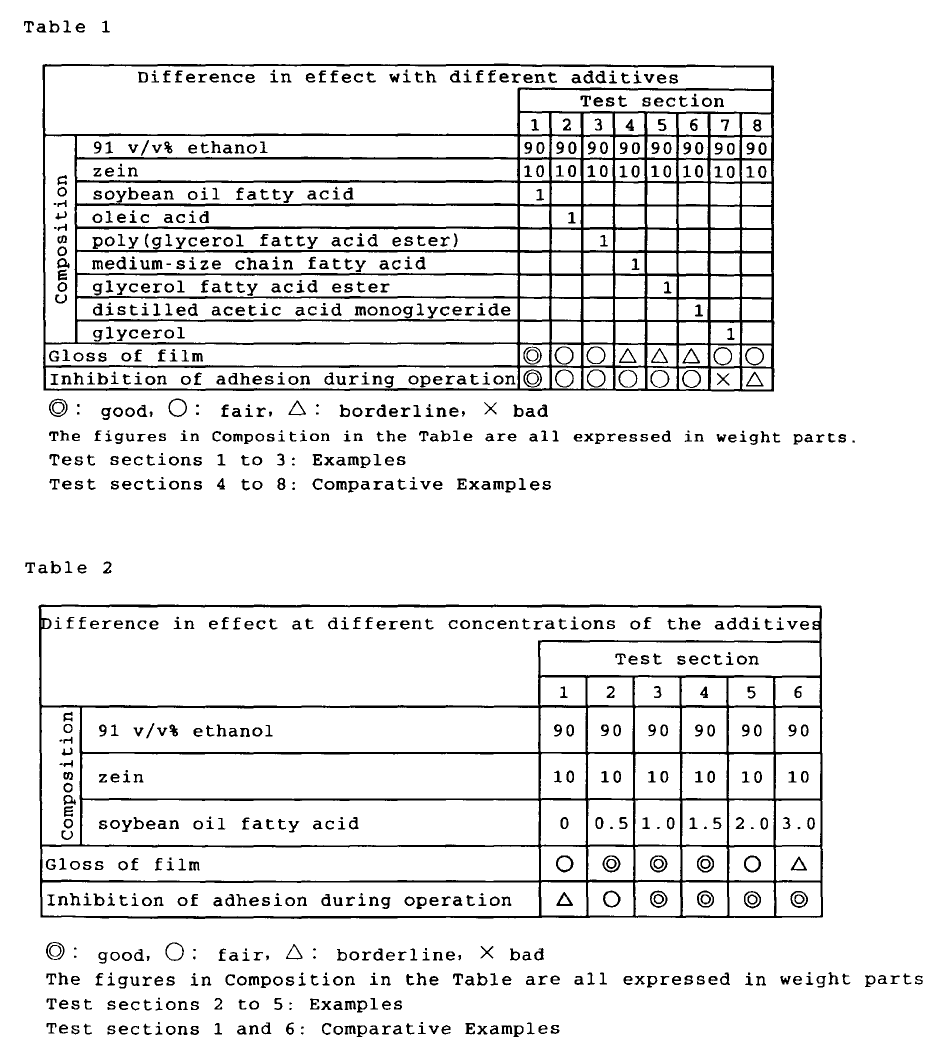

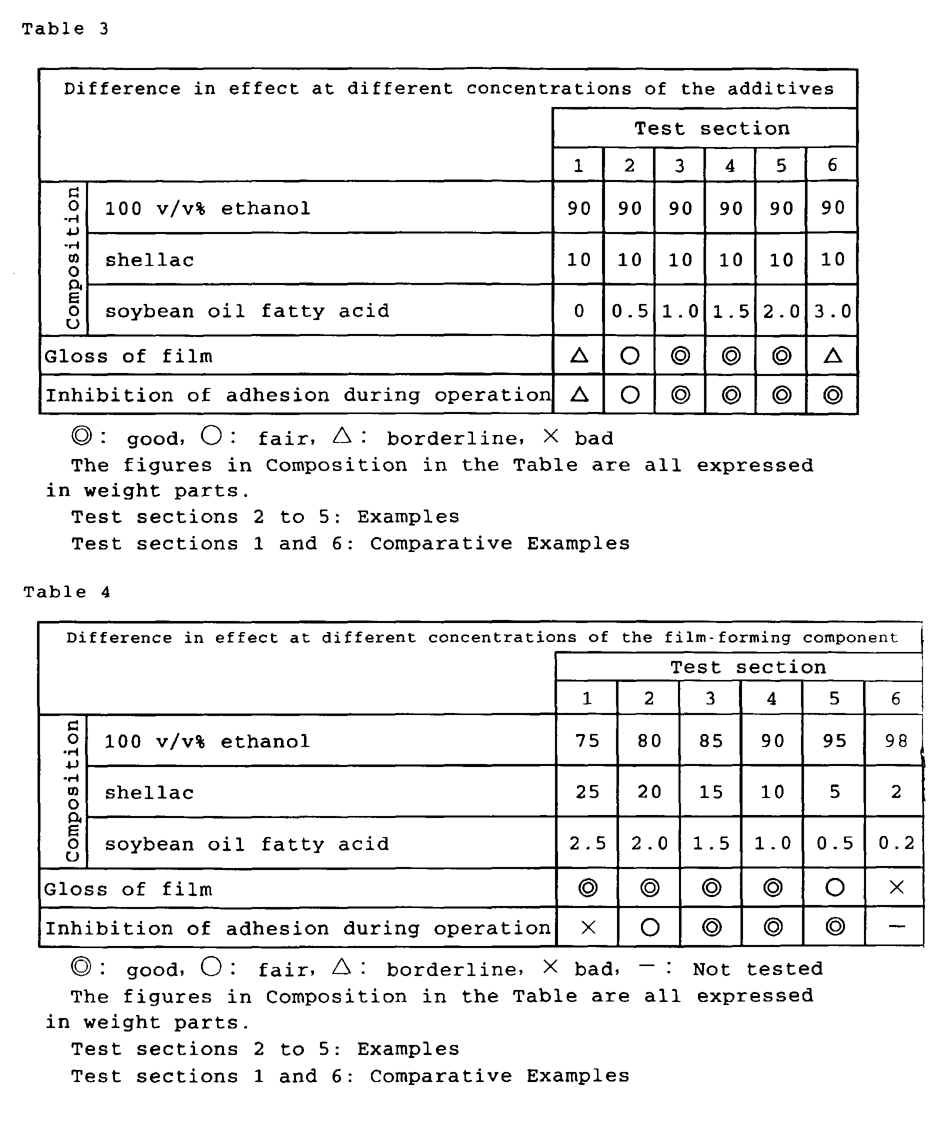

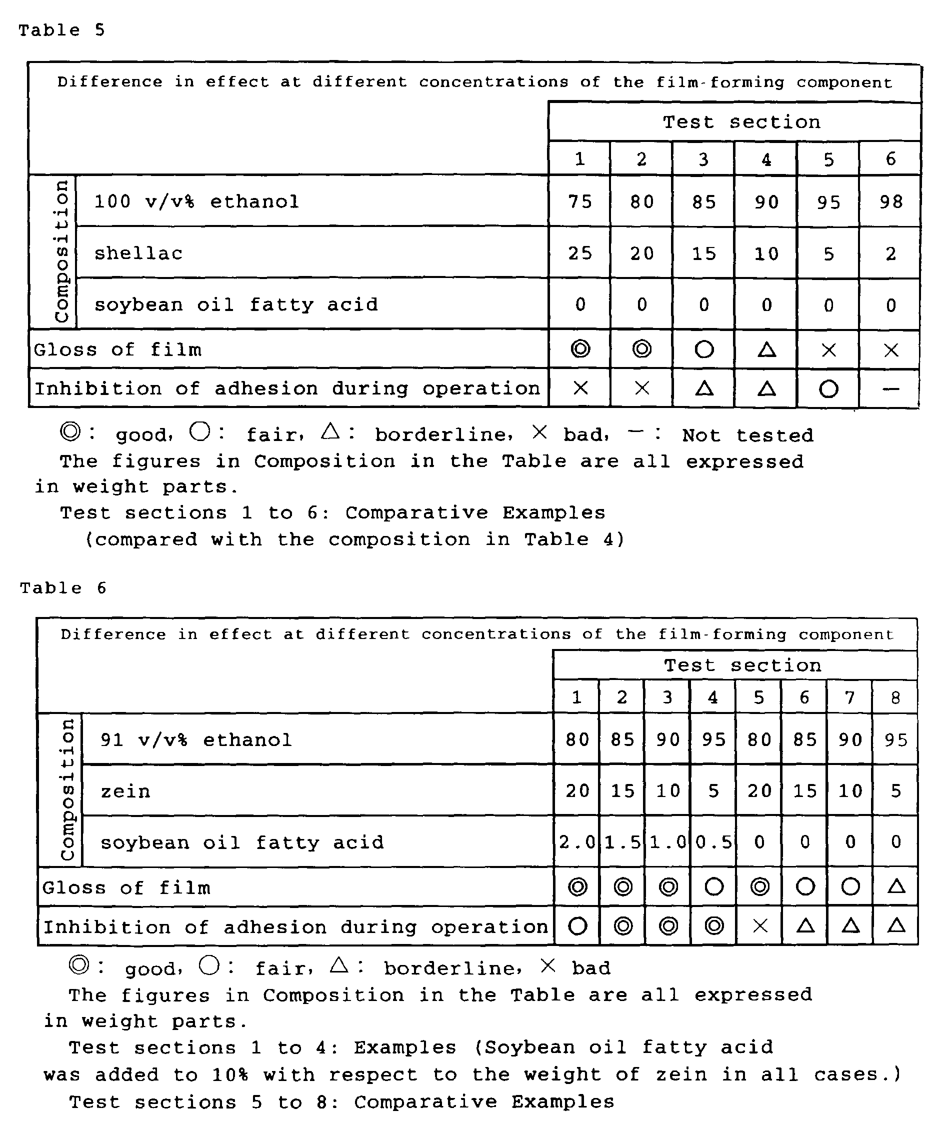

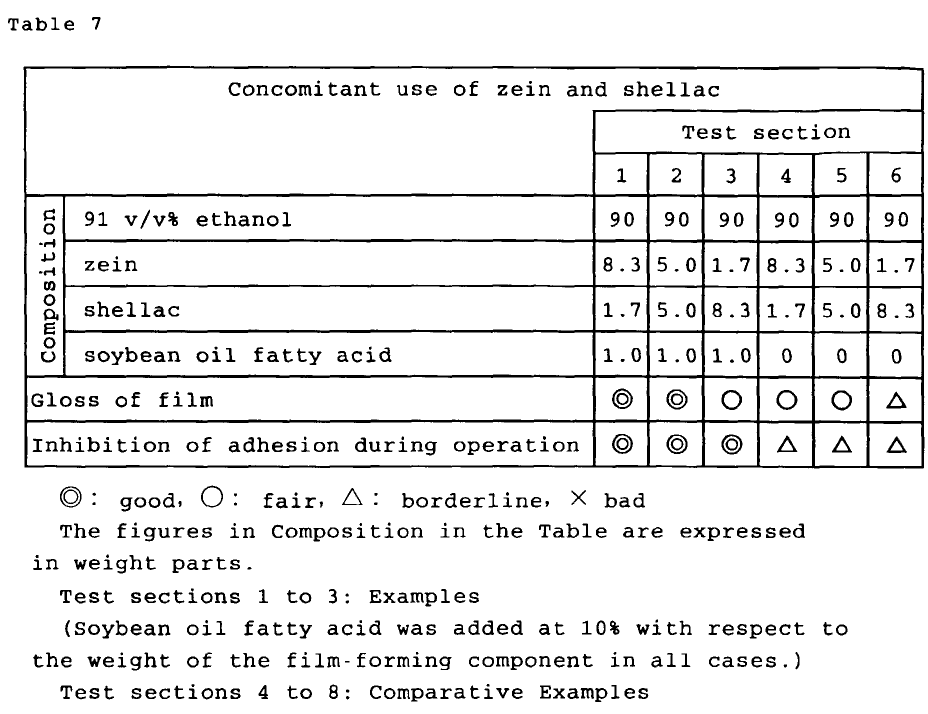

As seen from the Tables, in Table 1, the aimed coating can be obtained in the test sections 1 to 3 where both gloss of the film and inhibition of adhesion during operation are evaluated to be ⓞ or ○. In Table 2, the aimed coating can be obtained in the test sections 2 to 5 where both gloss of the film and inhibition of adhesion during operation are evaluated to be ⓞ or ○. In Table 3, the aimed coating can be obtained in the test sections 2 to 5 where both gloss of the film and inhibition of adhesion during operation are evaluated to be ⓞ or ○. In Table 4, the aimed coating can be obtained in the test sections 2 to 5 where both gloss of the film and inhibition of adhesion during operation are evaluated to be ⓞ or ○, as proved by comparison with Table 5. In Table 6, the aimed coating can be obtained in the test sections 1 to 4 where both gloss of the film and inhibition of adhesion during operation are evaluated to be ⓞ or ○. In Table 7, the aimed coating can be obtained in the test sections 1 to 3 where both gloss of the film and inhibition of adhesion during operation are evaluated to be ⓞ or ○.

### Industrial Applicability

This invention is able to provide a coated glazing agent for food that inhibits adhesion among particles during coating and forms a glossy film, thus being excellent in workability.

## Claims

1. A coated glazing agent for food, primarily consisting of a solution prepared by dissolving a film-forming component at a concentration of 5 to 20 w/w% in an ethanol and/or isopropanol solvent, and a lipid that is liquid at ordinary temperatures and soluble in said solvent, the lipid being dissolved in said solution at a concentration of 5 to 20 w/w% based on the solid matter of the film-forming component.

2. The coated glazing agent for food according to Claim 1, wherein, in said solution prepared by dissolving zein or/and shellac as a film-forming component at a concentration of 10 to 15 w/w% in an ethanol and/or isopropanol solvent, a lipid is dissolved at a concentration of 10 to 15 w/w% when zein is used and 10 to 20 w/w% when shellac is used, based on the solid matter of the film-forming component, the lipid being liquid at ordinary temperatures and soluble in said solvent.

3. The coated glazing agent for food according to Claim 1 or 2, wherein the lipid being liquid at ordinary temperatures and soluble in the solvent is a liquid fatty acid or/and poly(glycerol fatty acid ester).

4. The coated glazing agent for food according to Claim 3, wherein the liquid fatty acid is at least one selected from a group consisting of oleic acid, myristic acid, lauric acid, and a mixed fatty acid derived from edible vegetable fat and oil.

5. The coated glazing agent for food according to Claim 4, wherein the mixed fatty acid derived from edible vegetable fat and oil is soybean oil fatty acid or/and rice bran oil fatty acid.

6. The coated glazing agent for food according to any one of Claims 1 to 5, wherein the zein is one purified through extraction with alcohol and precipitation of the extract in nearly anhydrous acetone.

7. The coated glazing agent for food according to any one of Claims 1 to 6, wherein food is confectionery.

8. The coated glazing agent for food according to Claim 7, wherein the confectionery is globular, tableted, or granulated chocolate.
